Europäisches Patentamt

European Patent Office

Office européen des brevets

(11) Publication number: **0 145 374**
A2

# (12) EUROPEAN PATENT APPLICATION

(21) Application number: **84308086.2**

(22) Date of filing: **21.11.84**

(51) Int. Cl.⁴: **B 60 K 41/20,** B 60 K 31/02,
B 60 T 7/12

(30) Priority: **06.12.83 GB 8332536**

(43) Date of publication of application: **19.06.85**
**Bulletin 85/25**

(84) Designated Contracting States: **DE FR IT SE**

(71) Applicant: **AE PLC, Cawston House Cawston, Rugby Warwickshire CV22 7SB (GB)**

(72) Inventor: **Caldwell, Kenneth Bruce, 8 Oak Street, Rugby Warwickshire (GB)**

(74) Representative: **Foster, David Martyn et al, Mathisen, Macara & Co. Lyon House Lyon Road, Harrow Middlesex HA1 2ET (GB)**

(54) **Automatic speed control systems.**

(57) An automatic speed control system particularly for use with coaches has a comparator (12) for comparing the actual road speed of the vehicle with a reference to produce an error signal for controlling the engine power via a control unit (18) so as to hold the vehicle at the desired speed. In addition the error signal is fed to a comparator (52) which, if the error signal indicates too high an excess speed, provides positive retardation of the vehicle via a retardation unit (30) which may be the actual brakes of the vehicle or (preferably) its electric retarder. A comparator (54) may also be arranged to be responsive to excess engine speed and to actuate the retarder via an OR gate (60).

## BACKGROUND OF THE INVENTION

The invention relates to automatic speed control systems such as for controlling the road speed of motor vehicles. More specifically, the invention relates to automatic speed control systems for heavier road vehicles such as trucks or coaches.

## BRIEF SUMMARY OF THE INVENTION

According to the invention, there is provided an automatic speed control system for a vehicle, comprising means operative to produce an actual speed signal representing actual speed, control means responsive to the actual speed signal so as to produce a control signal when the actual speed exceeds a predetermined limit speed, and output means responsive to the control signal to provide positive retardation of the vehicle.

According to the invention there is also provided an automatic speed control system for a vehicle, comprising first speed-dependent means operative to produce an actual road speed signal representing the actual road speed of the vehicle, second speed-dependent means operative to produce an actual engine speed signal representing the actual engine speed of the vehicle independently of its road speed, first comparing means for comparing one of the said actual speed signals with a predetermined reference signal whereby to produce an error signal indicating the sign and magnitude of any error between them, first control means responsive to the error signal and operative to adjust the engine power of the engine of the vehicle in such a sense and by such an amount as to tend to reduce that error signal to zero, second comparing means operative in dependent on one or both actual speed signals to determine when one or both of them exceeds a predetermined limit speed to produce a braking signal, and retarding means responsive to the braking signal to cause positive retardation of the vehicle.

According to the invention there is further provided an automatic speed control system for a vehicle, comprising means responsive to the actual speed of the vehicle and to the actual engine speed of the engine of the vehicle for producing two error signals respectively dependent on the signs and magnitudes of the errors between the actual speeds and desired values thereof, means for comparing the error signals to determine which represents the greater error, and speed control means responsive to the one representing the greater error to control the power of the vehicle's engine in such a manner as to tend to reduce the error to zero.

## DESCRIPTION OF THE DRAWINGS

Automatic speed control systems embodying the invention will now be described, by way of example only, with reference to the accompanying diagrammatic drawings in which:

Figure 1 is a block circuit diagram of one of the systems; and

Figure 2 is a block circuit diagram of another one of the systems.

## DESCRIPTION OF PREFERRED EMBODIMENTS

The systems illustrated are for use in coaches primarily but may also be used in other road vehicles, primarily heavy vehicles.

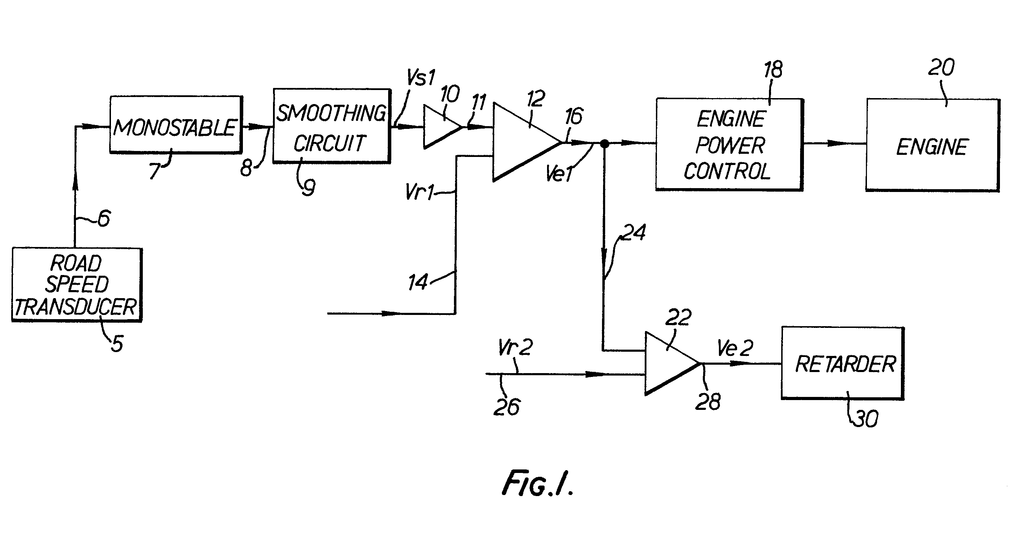

As shown in Figure 1, the system comprises a transducer 5 which produces an electrical signal on a line 6 corresponding to the road speed of the vehicle. The transducer 5 may take any suitable form. For example, it may be an electromagnetic or photoelectric type of device arranged to receive electromagnetic or photoelectric pulses in dependence on the road speed of the vehicle, such as by being electromagnetically or photoelectrically responsive to the rotational speed of the propellor shaft of the vehicle. The resultant pulsed output is used to drive a monostable 7 which produces a train of pulses on a line 8 of similar length but whose pulse repetition frequency depends on the road speed. In such a case, this is preferably smoothed or otherwise processed by a processing circuit 9 so as to produce a generally DC electrical signal Vs1 on a line 10 whose magnitude is proportional to the vehicle road speed. Vs1 is passed through an AC amplifier 10 which passes the signal Vs1 and amplifies sudden changes in the DC value. The amplifier output is passed into an error amplifier 12 which compares its magnitude with a reference signal Vr1 on a line 14 representing the desired speed of the vehicle. The reference on the line 14 may be derived from a manually settable control which is set by the driver, for example a potentiometer. Instead, a store could be provided which is instantaneously connected to receive the signal on the line 10 when the vehicle is running at a road speed desired by the driver and then stores that magnitude of signal which thereafter provides the reference on the line 14. Another possibility is to provide a fixed reference on the line 14, that is, a signal whose level is not under control of the driver but represents the maximum speed which it is desired to permit the vehicle to run.

In each case, however, the result is that the error amplifier 12 compares the magnitudes of the signals received on the lines 10 and 14 and produces an error signal, Vel, on a line 16 whose magnitude represents the error (if any) between the desired and actual road speeds and whose sign indicates whether the actual road speed is greater or less than the desired speed.

The error signal is passed to an engine power control unit 18. This is arranged to respond to the sign and magnitude of Vel and to adjust the power of the engine 20 of the vehicle in such a sense as to bring the actual road speed of the vehicle to the desired value, whereupon, of course, the signal Vel tends to zero.

The control unit 18 may be electromechanical in nature such as in the form of an electro-pneumatic arrangement, or may be an electric motor, which adjusts the carburettor or diesel injection system of the vehicle so as to control the engine power in the desired manner and independently of the driver's foot control. Examples of forms which the engine power control unit 18 may take are shown in U.K. Patents Nos. 1486822 and 1493623.

In addition, however, the error signal $Ve1$ is passed to a comparator 22 on a line 24. Comparator 22 compares the magnitude of the error signal $Ve1$ with a fixed reference $Vr2$ on a line 26. $Vr2$ is selected so that if the magnitude of $Ve1$ exceeds this reference, this means that the actual road speed of the vehicle is exceeding the desired value by at least a predetermined (relatively small) amount, and in such a case the comparator 22 produces an output signal $Ve2$ on a line 28. Signal $Ve2$ is passed to a retarder unit 30 which acts positively on the vehicle in a suitable manner so as actually to reduce its speed. Thus, the retarder unit 30 may be in the form of the actual brakes of the vehicle so that these are applied to bring the road speed of the vehicle down to the desired level. More advantageously, however, the retarder unit 30 takes the form of the electrical retarder which is commonly fitted to coaches and which acts usually on the propellor shaft of the vehicle so as to provide electrical braking of the vehicle.

In this way, an additional safeguard is provided. Without the provision of the comparator 22, it is still possible for the vehicle to be driven at an excess speed downhill. In such a case, the remainder of the system can merely reduce the engine power to a minimum, but if the hill is steep enough, this does not prevent the vehicle overspeeding. The comparator 22 acting in combination with the retarder 30 does prevent this.

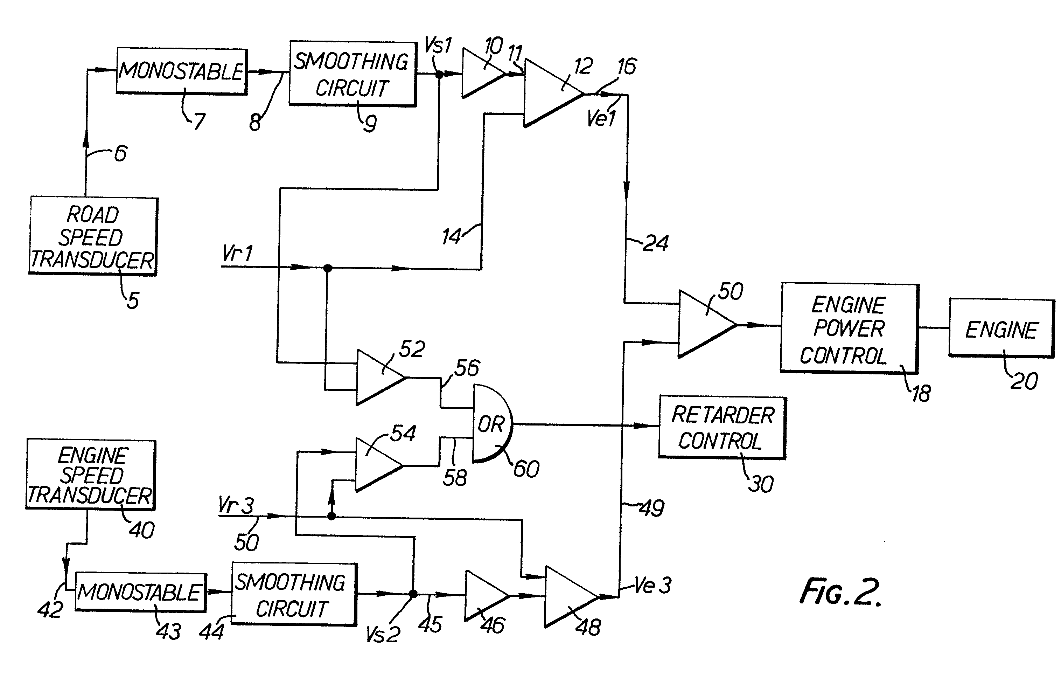

In the system of Figure 2, items corresponding to items in Figure 1 are correspondingly referenced.

In Figure 2, a further transducer 40 is provided which produces an electrical signal on a line 42 dependent on the actual engine speed of the vehicle. The transducer 40 may take any suitable form and may be actuated, for example, by electrical impulses from the ignition system of the engine if it is of the spark ignition type. If it is a diesel engine, then a separate transducer may be provided. In each case, the electrical signal 42, if of pulsed form, is passed to a monostable 43 corresponding to the monostable 7 and the resultant pulse train is fed to a processing circuit 44 corresponding to the circuit 9 to produce a DC signal Vs2 on a line 45 whose magnitude corresponds to the actual engine speed. Vs2 is passed to an amplifier 46 corresponding to amplifier 10 and thence to an error amplifier 48 which compares it with a reference signal Vr3 on a line 50 representing a desired limit speed for the engine. Vr3 would normally be a fixed reference which would be set by the vehicle manufacturer or vehicle owner (that is, it would not be in control of the driver).

The result is that the error amplifier 48 produces an error signal Ve3 on a line 49 whose sign and magnitude represent the sign and magnitude of any error between the actual engine speed and the limit speed. Signal Ve3 is, together with the signal Ve1, passed to a comparator 50. Comparator 50 now acts to compare both the signals Ve1 and Ve3 with each other. Whichever is the greater will appear on the output of the comparator and will actuate the engine power control 18 so as to tend to reduce the error to zero.

In addition, the signal Vs1 is fed into a comparator 52 where it is compared with reference Vr1. Likewise, signal Vs3 is fed into another comparator 54 where it is compared with reference Vr3. The comparators 52 and 54 therefore produce error signals on lines 56 and 58 which respectively correspond to Ve1 and Ve3 but which are not subject to the effect of the AC amplifiers 7 and 45 and which are only produced if the respective speed error is positive (that is, the actual road or engine speed is greater than the desired level). These error signals are fed to an OR gate 60. The output of gate 60 is fed to the retarder control 30.

Therefore, the system of Figure 2 provides the additional safeguard of positively braking or retarding the vehicle in conditions when the engine speed is excessive even if the road speed is not. Thus, for example, it will positively brake or retard the vehicle if the driver should engage a lower gear at an excessive road speed. It will thus protect the vehicle against action by the driver in selecting a low gear at too higher speed on descending a hill (in an attempt to build up engine speed for a subsequent ascent).

The systems described may be used with advantage with the speed control systems disclosed in our co-pending U.K. Patent Applications Nos 8025881, 8025883 and 8122177.

CLAIMS

1.   An automatic speed control system for a vehicle, comprising means (5;40) operative to produce an actual speed signal (Vs1;Vs2) representing actual speed, and control means (12,14;52,54) responsive to the actual speed signal (Vs1;Vs2) so as to produce a control signal (Ve2) when the actual speed exceeds a predetermined limit speed, and characterised by output means (30) responsive to the control signal (Ve2) to provide positive retardation of the vehicle.

2.   A system according to claim 1, characterised in that the output means (30) includes means for operating the vehicle brakes in dependence on the said control signal.

3.   A system according to claim 1, characterised in that the output means (30) includes an electric retarder, in which the output means includes means responsive to the control signal to actuate the electrical retarder.

4.   A system according to any preceding claim, in that the actual speed represents the actual road speed of the vehicle.

5.  A system according to any preceding claim, in that
the actual speed represents the actual engine speed of
the vehicle (independent of its road speed).

6.  A system according to any preceding claim,
characterised by means (12;12,48) responsive the
actual speed signal (Vs1;Vs1 or Vs2) and a reference
speed signal (Vr1;Vr1 or Vr3) to produce an error
signal (Ve1;Ve1 or Ve3) whose sign and magnitude is
representative of the difference if any between them,
and means (18) responsive to the error signal to
adjust the power of the engine (20) of the vehicle to
tend to reduce the error signal (Ve1;Ve1 or Ve2) to
zero.

7.  A system according to claim 6, characterised in
that the means operative to produce the error signal
comprises first speed-dependent means (5,79) operative
to produce an actual road speed signal (Vs1)
representing the actual road speed of the vehicle,
second speed-dependent means (40,43,44) operative to
produce an actual engine speed signal (Vs2)
representing the actual engine speed of the vehicle independently of its road speed, and first comparing means (12 or 48) for comparing one (Vs1 or Vs2) of the said actual speed signals with a predetermined reference signal (Vr1 or Vr3) whereby to produce the said error signal (Ve1 or Ve3) indicating the sign and magnitude of any error between them, and by second comparing means (52,54) operative in dependent on one or both actual speed signals (Vs1 or Vs3) to determine when one or both of them exceeds a predetermined limit speed to produce the said control signal.

8.  A system according to claim 7, characterised in that the second comparing means comprises means (52 or 54) for comparing the said one actual speed signal (Vs1 or Vs2) with a second reference signal (Vr1 or Vr3) representing the said predetermined limit speed whereby to produce a first said control signal, and means (54 or 42) responsive to the other actual speed signal (Vs2 or Vs1) for comparing that other speed signal with a further speed reference signal (Vr3 or Vr1) representing the said predetermined limit speed so as to produce a second said control signal.

9. An automatic speed control system for a vehicle, comprising means (eg 12) responsive to an actual speed signal (eg Vs1) to produce an error signal (eg Ve1) representing the signal and magnitude of any error between the actual speed and a desired value thereof, and speed control means (18) responsive to the error signal (eg Ve1) to control the power of the vehicle's engine (20) in such a manner as to reduce the error to zero, characterised by means (48) responsive to a different actual speed signal (eg Vs2) to produce a second error signal (eg Ve3) representing the sign and magnitude of any error between the actual speed represented by that different actual speed signal (Vs2) and a desired value thereof, one said actual speed signal representing the speed of the vehicle and the other representing the speed of the vehicle, and means (50) operative to compare both error signals (Ve1, Ve3) to determine which represents the greater error to feed that error signal to the speed control means.

10. A system according to claim 10, characterised by retarder means (30) responsive to at least one said actual speed signal to produce positive retardation of the vehicle when the speed represented thereby exceeds a predetermined limit speed.

6CW01:6CW9

FIG.1.

1/2

0145374

Fig.2.